# EUROPÄISCHE PATENTSCHRIFT

(11) **EP 1 071 892 B1**
(45) Veröffentlichungstag und Bekanntmachung des Hinweises auf die Patenterteilung: **19.03.2003**
(21) Anmeldenummer: 99926237.1
(22) Anmeldetag: 09.04.1999
(51) Int. Cl.: F16H 55/50

(54) **SEILROLLE**
PULLEY
POULIE

(30) Priorität: 11.04.1998 DE 19816327
(43) Veröffentlichungstag der Anmeldung: 31.01.2001
(73) Patentinhaber: Wilhelm Kächele GmbH, Elastomertechnik, 73235 Weilheim/Teck (DE)
(72) Erfinder: BURKHARDT, Georg, D-73235 Weilheim am Teck (DE); KÄCHELE, Bruno, D-73235 Weilheim am Teck (DE)
(74) Vertreter: Patentanwälte Rüger, Barthelt & Abel
(86) Internationale Anmeldenummer: DE9901078
(87) Internationale Veröffentlichungsnummer: WO99053223

(56) Entgegenhaltungen:
- EP-A- 0 185 531
- FR-A- 1 265 904
- FR-A- 1 289 982
- GB-A- 418 549

## Beschreibung

Zur Führung und Unterstützung von Seilen bei Seilbahnen zum Material- und Personentransport werden Seilrollen benötigt. Solche Seilrollen bestehen, wie die EP-A-0 185 531 zeigt, aus einem Grundkörper, der eine Radnabe aufweist, mit der die Seilrolle auf einer ortsfesten Achse drehbar gelagert ist. Von der Radnabe gehen Speichen aus, die als Druckspeichen gestaltet sind und die Radnabe mit einem äußeren Ring des Grundkörpers verbinden. Dieser äußere Ring bildet eine zylindrische Außenumfangsfläche, die in axialer Richtung und somit seitlich von zwei Bundscheiben begrenzt ist. Die Bundscheiben sind einstückiger Bestandteil des äußeren Rings.

In der so begrenzten Nut sitzt ein Reifen aus einem harten elastomeren Material, dessen Außenumfangsfläche eine Seilrille bildet. Die Innenumfangsfläche dieses Reifens ist eine Zylinderfläche und sie hat einen etwas größeren Durchmesser als die in dem Außenumfang des äußeren Seilrollenrings enthaltene Nut. In diesem Spalt sitzt ein weiterer Ring, der elastisch sein soll.

Der radial äußere Ring der Seilrille soll hinreichend verschleißfest sein, während der andere, radial innere Ring eine gewisse radiale Nachgiebigkeit erzeugen soll.

Es hat sich jedoch gezeigt, dass bei solchen Seilrollen die radiale Nachgiebigkeit nicht ausreicht, um Kräfte abzufedern, die dadurch entstehen, dass über die Seilrolle eine am Seil angreifende Klemmfaust läuft.

Die Klemmfäuste, über die an dem Seil hängende Gondeln mit dem Seil verbunden sind, stellen aus der Sicht der Seilrolle eine lokale Verdickung dar. Wenn sie über die Seilrolle laufen, muss wegen der Verdickung entweder die am Seil hängende Last entsprechend angehoben werden oder die Seilrolle sich nach unten bewegen. Hierdurch entstehen erhebliche Kräfte, weil die Abstandsänderung zwischen dem Mittelpunkt der Seilrolle und der Seele des Seils relativ sehr schnell vonstatten gehen muss. Selbst wenn die Seilrolle als Ganzes federnd gelagert ist, sind die Kräfte enorm.

Ein weiteres Problem bei solchen Seilrollen ist die Walkarbeit, der das elastomere Material während des Laufes unterliegt. An jener Stelle, an der das Seil aufliegt, wird der elastomere Reifen zusammengedrückt und wegen der Rotation der Seilrolle läuft dieser komprimierte Bereich des elastomeren Reifens längs dem Reifen um, wodurch Walkarbeit entsteht. Die Walkarbeit führt zwangsläufig zu einer Erwärmung und einem entsprechenden Verschleiß des elastomeren Reifens.

Ausgehend hiervon ist es Aufgabe der Erfindung, eine Seilrolle zu schaffen, die sich hinsichtlich der Laufqualität und des Verschleißes günstiger verhält.

Diese Aufgabe wird erfindungsgemäß durch die Seilrolle mit den Merkmalen des Anspruches 1 gelöst.

Bei der erfindungsgemäßen Seilrolle besteht der auf der Außenumfangsfläche sitzende Reifen aus zwei Ringen, einem radial äußeren und einem radial inneren Ring. Der radial äußere Ring enthält die Seilrille und ist vergleichsweise hart bzw. abriebfest.

Als Material für den äußeren Ring kommen Kunststoffe und entsprechend harte Elastomere in Frage.

Der radial innere Ring hingegen besteht aus einem vergleichsweise weichen Elastomer, das eine möglichst geringe Dämpfung zeigen soll. Beim Darüberlaufen der Klemmfaust soll der radial innere Ring lediglich federnd nachgeben, aber möglichst wenig Dämpfungsarbeit leisten.

Damit die Walkarbeit, die durch die Kompression des radial inneren Ringes zustandekommt, möglichst über den gesamten radial inneren Ring verteilt wird und nicht nur sehr stark lokal wirksam ist, ist ein Versteifungsring vorgesehen, der sich in dem Reifen befindet. Dieser Versteifungsring kann sowohl zwischen dem radial äußeren und dem radial inneren Ring als auch innerhalb einem der Ringe eingebettet sein.

Durch den Versteifungsring wird auch erreicht, dass der äußere elastomere Ring weitgehend seine Kreisgestalt behält und kaum noch einer Walkarbeit unterliegt.

Weil für den inneren Ring ein Material mit geringer inneren Dämpfung gewählt werden kann, entsteht eine geringere Walkarbeit und damit eine geringere Erwärmung beim Betrieb der Seilrolle.

Um die größere Weichheit des inneren elastomeren Rings zu erzeugen, kann der innere elastomere Ring entweder aus einem weicheren Material bestehen oder er kann durch entsprechende Bohrungen oder Kammern, die in ihm enthalten sind, weicher gemacht sein.

Eine weitere Verbesserung der Laufeigenschaften wird erreicht, wenn der Reifen einen Versteifungsring enthält. Dieser Versteifungsring sorgt dafür, dass die von dem aufliegenden Seil herrührende Kraft gleichmäßig über den inneren Ring verteilt wird. Der innere Ring wird zufolge des Versteifungsrings nicht lokal in jenem Bereich verformt, der sich unmittelbar unter dem Seilauflagepunkt befindet, sondern die Verformung erstreckt sich über die gesamte Umfangslänge des inneren Rings.

Der Versteifungsring kann ein Kunststoff-Formteil, ein Blechformteil oder ein Metallguss- oder -schmiedeteil sein, wobei das Kunststoff-Formteil etwas nachgiebiger ist als das Metallteil. Über die Wahl der Härte des Kunststoff-Formteils kann festgelegt werden, welcher Umfangsbereich des inneren elastomeren Rings zufolge der Seilauflagekraft verformt wird.

Vorteilhafterweise ist die Gestalt des Versteifungsrings derart gewählt, dass der radial innere elastomere Ring und/oder der radial äußere Ring über seine axiale Länge gesehen etwa konstante Dicke aufweist.

Um eine Demontierbarkeit des Reifens von dem Rollenkörper zu ermöglichen, ohne den festen Sitz des Reifens auf dem Rollenkörper zu beeinträchtigen, ist zweckmäßigerweise eine Spanneinrichtung vorgesehen. Diese Spanneinrichtung wirkt im Wesentlichen radial.

Die Spanneinrichtung hat im einfachsten Falle eine ringförmige, im Wesentlichen rotationssymmetrische Gestalt mit einer radial inneren und einer radial äußeren Fläche. Sie wird entweder zwischen dem Reifen und dem Rollenkörper eingefügt oder sie befindet sich quasi innerhalb des Reifens.

Um die Spannwirkung zu erzielen, ist die Spanneinrichtung zweigeteilt, wobei durch axiales Zusammenspannen dieser Teile die radiale Vorspannkraft erzeugt wird, die einerseits radial nach innen gegen den Rollenkörper und andererseits nach außen zu dem Reifen wirkt.

Die Spannwirkung lässt sich am einfachsten erreichen, indem die Spanneinrichtung in zwei Ringe aufgeteilt ist, deren Dicke sich in Achsrichtung verändert. Im einfachsten Falle hat jeder der Ringe eine außen kegelstumpfförmige Gestalt und eine kegelstumpfförmige Bohrung, wobei die diese Flächen definierenden Kegel entgegengesetzt gerichtet sind. Wenn die beiden Ringe der Spanneinrichtung mit ihrem dünneren Ende einander zugekehrt montiert werden, entsteht, bezogen auf ihre axiale Erstreckung, eine Einschnürung etwa in der Mitte. Wenn der Reifen bzw. der Rollenkörper entsprechend komplementär gestaltet sind, erzeugt eine aufeinander zu gerichtete Bewegung der beiden Ringe der Spanneinrichtung zueinander die gewünschten radialen Spannkräfte.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 eine Seilrolle gemäß der Erfindung, in einer perspektivischen aufgebrochenen Darstellung,
Fig. 2 den Reifen der Seilrolle nach Fig. 1, in einer vergrößerten aufgebrochenen perspektivischen Darstellung,
Fig. 3 bis 4 andere Ausführungsbeispiele für den Reifen der erfindungsgemäßen Seilrolle, in einem Querschnitt, und
Fig. 5 eine erfindungsgemäße Seilrolle mit radial wirkender Spanneinrichtung, in einer Explosionsdarstellung und im Längsschnitt.

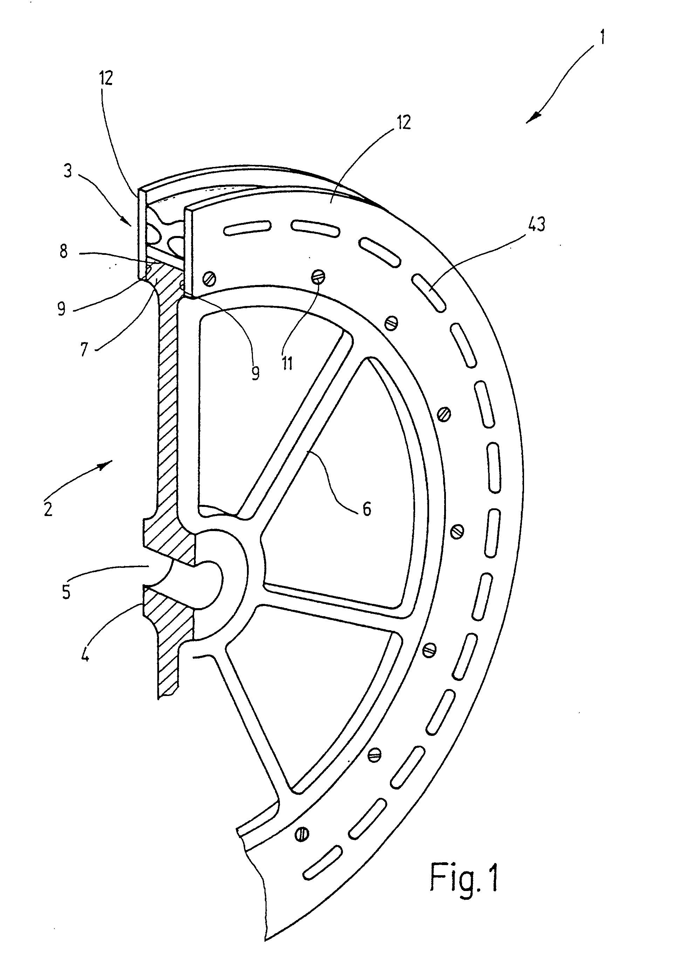

In Fig. 1 ist in einer perspektivischen aufgebrochenen Darstellung eine Seilrolle 1 für Seilbahnen veranschaulicht.

Die Seilrolle 1 weist einen Rollenkörper 2 und einen auf diesem befestigten Reifen 3 auf. Der Rollenkörper 2 ist ein einstückiges Gussteil, das eine zentrale, etwa zylindrische Nabe 4 mit einer durchgehenden Lagerbohrung 5 bildet. Von der Nabe 4 gehen mehrere Speichen 6, die als Druckspeichen ausgestaltet sind, radial nach außen zu einem äußeren Seilrollenring 7, der über die Druckspeichen 6 einstückig mit der Nabe 4 verbunden ist. Der Seilrollenring 7 bildet eine zylindrische Sitzfläche 8 für den Reifen 3. Die zylindrische Sitzfläche 8 ist zu der Lagerbohrung 5 konzentrisch.

In axialer Richtung ist der Seilrollenring 7 von zwei zueinander im Wesentlichen parallelen Flankenflächen 9 begrenzt, die, ausgehend von der zylindrischen Sitzfläche 8, ein Stück weit sich in radialer Richtung auf die Nabe 4 zu erstrecken.

Im gezeigten Ausführungsbeispiel sind die Flankenflächen 9 zueinander parallele, ringförmige Planflächen mit einem Abstand entsprechend der axialen Länge der Sitzfläche 8. Es können aber auch kegelstumpfförmige Flächen sein, die so orientiert sind, dass die gedachte Kegelspitze auf der jeweils anderen Seite der Seilrolle 1 liegt.

An jeder Flankenfläche 9 ist mit Hilfe mehrerer äquidistant verteilter Schrauben 11 jeweils eine Bordscheibe 12 befestigt. Die beiden Bordscheiben 12 dienen der axialen Sicherung des Reifens 3 und sollen außerdem eine zusätzliche Sicherung für das darüber laufende Seil bilden, um ein seitliches Herunterlaufen zu verhindern.

Bei einer typischen Seilrolle bewegt sich der Wirkdurchmesser zwischen 100 bis 700 mm.

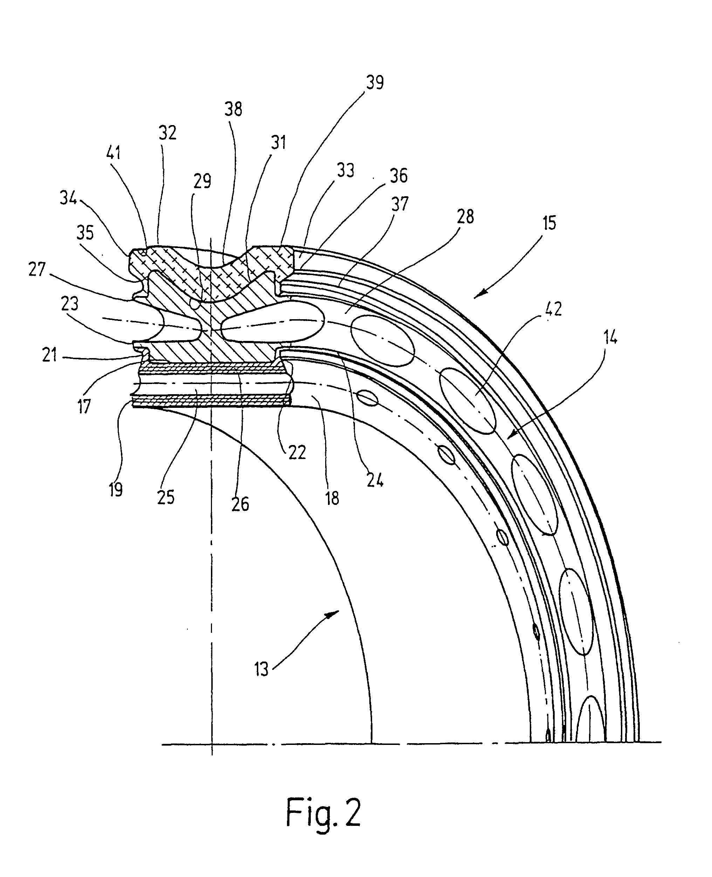

In Fig. 2 ist der Reifen 3 in einer vergrößerten Darstellung perspektivisch und aufgeschnitten gezeigt. Die Drehachse der Seilrolle 1 liegt in der Schnittebene.

Der Reifen 3 ist, bezogen auf die Radialrichtung, sandwichartig aufgebaut und wird im Wesentlichen von drei konzentrisch ineinanderliegenden Ringen 13, 14 und 15 gebildet. Der radial innenliegende Ring 13 besteht aus einem elastomeren Material mit einer Shore-Härte zwischen 40 und 75. Er wird von einer radial innenliegenden Zylinderfläche 16, einer radial nach außen weisenden zylindrischen Fläche 17 sowie zwei in Achsrichtung liegenden Flankenflächen 18 und 19 begrenzt. Außerdem sind an dem inneren elastomeren Ring 13 außen zwei seitliche Leisten 21 und 22 angeformt, die die beiden Flankenflächen 18, 19 radial nach außen ein Stück weit verlängern. Die Leisten 21 und 22 gehen in axial nach außen weisende Lippen 23 und 24 über. Außerdem enthält der Ring 13 eine nicht dargestellte Textilverstärkung neben der Innenumfangsfläche 16.

Im Bereich zwischen der Zylinderfläche 16 und den Lippen 23, 24 ist der Querschnitt des inneren elastomeren Rings 13 etwa trapezförmig in der Weise, dass der innere elastomere Ring 13 im Bereich der Zylinderfläche 16 seine größte axiale Ausdehnung hat. Auf der Höhe der axial außenliegenden Zylinderflächen 17 ist er etwas schmäler.

Zur Verbesserung der Wärmeabfuhr und zur Verbesserung der Nachgiebigkeit ist der elastömere Ring 13 mit einer Vielzahl von achsparallelen Durchgangsöffnungen 25 versehen, die längs dem Umfang des elastomeren Rings 13 äquidistant verteilt sind und von der Flanken- oder Stirnfläche 18 zu der Flanken- oder Stirnfläche 19 führen.

Der Durchmesser der zylindrischen Fläche 16 ist genauso groß wie der Außendurchmesser der Sitzfläche 8 bzw. etwas kleiner, gerade ausreichend, damit ein Press-Sitz des Reifens 3 auf dem Rollenkörper 3 zustandekommt.

Der radial etwas weiter außen liegende und an den Ring 13 angrenzende Ring 14 ist ein Versteifungsring. Er besteht aus einem Kunststoff-Formteil, das die aus der Fig. 2 ersichtliche konturierte Querschnittsgestalt aufweist. Die Querschnittsgestalt des Versteifungsrings 14 ist längs dem gesamten Umfang konstant.

Der Versteifungsring 14 wird auf seiner radial innenliegenden Seite von einer Zylinderfläche 26, zwei Seitenoder Flankenflächen 27 und 28 sowie einer radial außenliegenden Umfangsfläche 29 begrenzt. Die radial innen liegende Umfangsfläche 26 ist die komplementäre Zylinderfläche zu der Umfangsfläche 17 des inneren Rings 13. Die Flankenflächen 27 und 28 sind im Bereich der beiden seitlichen Leisten 21 und 22 mit einem Rücksprung versehen, während oberhalb der Lippen 23 und 24 der Abstand zwischen den Flankenflächen 27 und 28 gleich der Breite der Zylinderfläche 16 ist.

Oberhalb der beiden Lippen 23 und 24 sind die Flankenflächen 27 und 28 zueinander parallele Ringflächen, an die sich radial weiter außen ein weiterer Rücksprung mit einer axialen Tiefe entsprechend dem Rücksprung im Bereich der Leisten 21 und 22 anschließt.

Die äußere Umfangsfläche 29 ist eine zu der Drehachse konzentrische Rotationsfläche und rillen- oder rinnenförmig ausgeführt, wie dies die Fig. 2 erkennen lässt. Auf diese Weise entsteht eine in Umfangsrichtung laufende Rille mit einem Rundungsradius entsprechend dem Abstand dieser Außenumfangsfläche 29 von der Seele eines über die Seilrolle 1 laufenden Seils.

Der Versteifungsring 14 ist mit dem inneren elastomeren Ring 13 im Bereich der Umfangsflächen 17 und 26 sowie der beiden Leisten 21 und 22 sowie der Lippen 23, 24 stoffschlüssig verbunden.

Die hochgezogenen seitlichen Leisten 21 und 22 sollen verhindern, dass aufgrund der auftretenden Walkbewegungen die stoffschlüssige Verbindung zwischen den Flächen 17 und 26 von der Flanke her einreißt.

Der radial am weitesten außen liegende Ring 15 ist ebenfalls ein elastomerer Ring, der jedoch eine größere Härte aufweist als der innere elastomere Ring 13. Das Material des äußeren elastomeren Rings 15 weist eine Shore-Härte zwischen 70 und 95 auf.

Der äußere elastomere Ring 15 wird radial innen von einer Innenumfangsfläche 31, radial außen von einer Außenumfangsfläche 32 sowie seitlich von zwei Flankenflächen 33 und 34 begrenzt. Die Innenumfangsfläche 31 hat denselben Verlauf und dieselbe Gestalt wie die Außenumfangsfläche 29 des Versteifungsrings 14.

Die beiden seitlichen Flankenflächen 33 und 34 gehen in zwei radial nach innen zeigende Leisten 35 und 36 über, die in dem radial außenliegenden Rücksprung in den Flankenflächen 27 und 28 des Versteifungsrings 14 ausgebildet sind. Die beiden Leisten 35 und 36 sind seitlich etwas eingezogen, so dass im Bereich dieser beiden Leisten 35 und 36 auf jeder Stirnseite des Reifens 3 jeweils eine Nut 37 entsteht, die in Umfangsrichtung verläuft. Die Nuten 37 sind zu der Flanke des Reifens 3 hin offen.

Die Außenumfangsfläche 32 ist mit einer Seilrille 38 versehen, deren Krümmungsradius etwa gleich dem Abstand der Seele eines darüber laufenden Seiles von der Außenumfangsfläche 32 ist. Die Seilrille 38 befindet sich mittig zwischen den Flankenflächen 33 und 34.

Neben beiden Seiten der Seilrille 38 ist jeweils eine kleine V-förmige Nut 39 bzw. 41 vorgesehen.

Wie im Falle des inneren elastomeren Rings 13, so ist auch der äußere elastomere Ring 15 mit dem Versteifungsring 14 stoffschlüssig verbunden. Die stoffschlüssige Verbindung zwischen den Flächen 31 und 29 soll dabei durch die seitlichen Leisten 35 und 36 gegen Aufreißen geschützt werden.

Die Querschnittsgestalt des Reifens 3 und seiner einzelnen ihn bildenden Ringe 13, 14, 15 ist längs dem Umfang konstant. Die einzigen Unterbrechungen in diesem Verlauf sind Sacköffnungen 42, die von den Flanken 27 und 28 her in den Versteifungsring 14 hineinreichen. Diese Sacköffnungen 42 sollen einerseits das Gewicht des Versteifungsrings 14 vermindern und damit zu einer Materialersparnis beitragen und andererseits die Wärmeabfuhr aus dem Inneren des Reifens 3 begünstigen.

Um diese Funktion zu erreichen, enthalten die beiden Bordscheiben 12, die den Reifen 3 in axialer Richtung auf der Sitzfläche 8 festhalten, entsprechende Öffnungen 43, die im montierten Zustand möglichst mit den Sacköffnungen 42 fluchten.

Außerdem können in den Bordscheiben 12 noch weitere, nicht dargestellte Durchgangsöffnungen vorhanden sein, die sich auf einer Höhe entsprechend den Durchgangsöffnungen 25 befinden.

Zur Montage des in Fig. 2 gezeigten Reifens wird an dem Seilrollenkörper 2 zunächst eine der beiden Bordscheiben 12 mit Hilfe der Befestigungsschreiben 11 angeschraubt. Sodann wird in axialer Richtung der Reifen 3 auf die Sitzfläche 8 aufgezogen, soweit, bis er mit den Flankenflächen 27 oder 28 an der Innenseite der befestigten Bordscheibe 12 anliegt. Anschließend wird die zweite Bordscheibe 12 montiert und mit den Schrauben 11 befestigt.

Wenn über die so gestaltete Seilscheibe 1 ein Tragseil einer Seilbahn zur Personen- oder Materialbeförderung läuft, steht das Seil mit dem äußeren elastomeren Ring 15 in unmittelbarer Berührung. Da dieser Ring 15 aus einem vergleichsweise harten Elastomer besteht, wird eine gute Abriebfestigkeit erreicht, während andererseits die Geräuschentwicklung gering ist.

Durch das Gewicht des darüber laufenden Seils mit den daran hängenden Gondeln wird sich der äußere elastomere Ring 15 aufgrund seiner großen Härte verhältnismäßig wenig verformen.

Der innere elastomere Ring 13 ist dagegen wesentlich weicher, weshalb sich dieser verformen wird, allerdings nicht nur lokal, sondern über seinen gesamten Umfangsbereich. Der zwischen den beiden elastomeren Ringen 13 und 15 enthaltene Versteifungsring 14 verteilt die von dem Gewicht des Seils herrührende Kraft so, dass der Versteifungsring 14 geringfügig gegenüber der Sitzfläche 8 exzentrisch wird. Unmittelbar unter dem Seilauflagepunkt wird der innere elastomere Ring 13 zusammengedrückt, während er an der diesem Punkt bezüglich der Drehachse diametral gegenüberliegenden Stelle auf Zug beansprucht wird. Hingegen tritt an zwei Stellen, die exakt um 90° dagegen verdreht sind, in dem elastomeren Ring 13 ausschließlich eine Scherbeanspruchung auf. Je nachdem, in welcher Richtung, ausgehend von dieser Stelle mit einer Scherbeanspruchung fortgeschritten wird, vermindert sich die Scherbeanspruchung und geht in eine Druckbeanspruchung über bzw. wechselt zu einer Zugbeanspruchung. Auf diese Weise wird die beim Darüberlaufen des Seils auftretende Walkbeanspruchung des Reifens 3 über den gesamten Umfang des inneren Rings 13 gleichmäßig verteilt. Der innere Ring 13 kann folglich aus einem vergleichsweise sehr weichen elastomeren Material hergestellt werden, weil über eine relativ große Fläche der Seildruck in den starren Seilrollenkörper 2 eingeleitet wird.

Das weiche elastomere Material kann mit einer sehr geringen inneren Dämpfung ausgestattet werden, womit die durch das Walken auftretende Arbeit kleingehalten wird und sich der innere elastomere Ring 13 nur wenig infolge des Walkens erwärmt.

Wenn die Klemmfaust, über die der Stiel der Gondel mit dem Seil verbunden ist, über die beschriebene Seilrolle 1 läuft, entsteht kurzzeitig wegen der scheinbaren Seilverdickung eine nach unten gerichtete Kraft. Der Verdickung kann der verhältnismäßig weiche innere elastomere Ring 13 gut ausweichen.

Da bekanntlich Elastomere nicht kompressibel sind, entsteht durch das Verformen infolge der Seilkraft eine entsprechende Querschnittsänderung. Damit diese Querschnittsänderung tatsächlich eintreten kann und nicht durch die beiden Bordscheiben 12 gesperrt wird, laufen die beiden Flanken 18 und 19 des inneren elastomeren Rings 13 aufeinander zu. Hierdurch entsteht gegenüber den beiden Bordscheiben 12 jeweils ein keilförmiger Spalt, der bei der lokalen Kompression des elastomeren Rings 13 gefüllt wird.

Eine ähnliche Funktion haben die seitlichen Rillen 37 sowie die an der Oberseite enthaltenen V-förmigen Nuten 39 und 41.

Um das Federungs-, Dämpfungs- und Abnutzungsverhalten zu verändern, können der innere und/oder der äußere elastomere Ring 13, 15 gegebenenfalls Textileinlagen aus Metallfäden, Kunststoff- oder Naturfasern enthalten. Außerdem kann eine Textileinlage in dem inneren Ring 13 den Reibschluss zwischen dem Reifen 3 und dem Rollenkörper 2 verbessern.

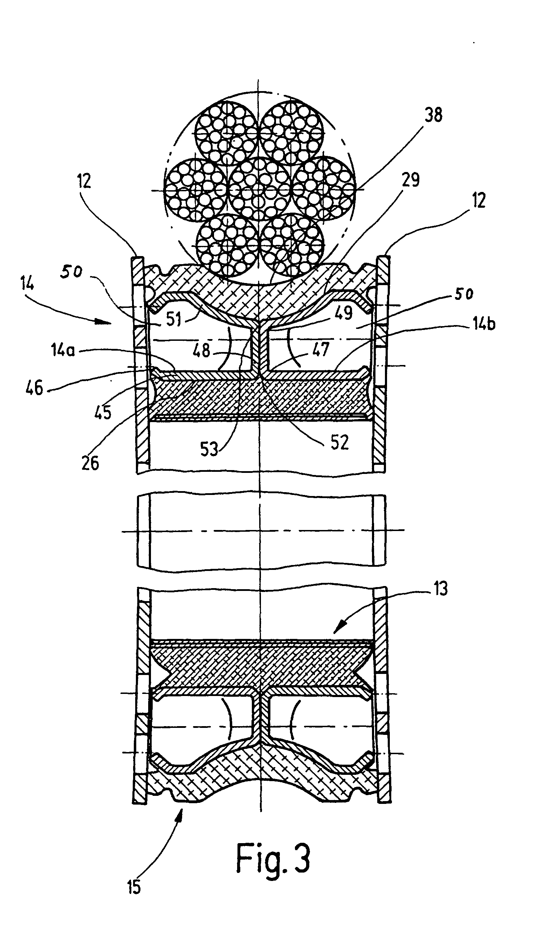

Bei dem Ausführungsbeispiel nach Fig. 2 ist der Versteifungsring 14 ein gegebenenfalls faserverstärktes Kunststoff-Formteil. Wenn dessen Festigkeit nicht ausreicht, um in hinreichendem Maß die Belastung über den Umfang des inneren Rings 13 zu verteilen, kann auch ein Versteifungsring 14 verwendet werden, wie er in Fig. 3 gezeigt ist. Dieser Versteifungsring 14 besteht aus zwei Ringhälften 14a und 14b, die gleiche Gestalt haben und umgekehrt zueinander angeordnet sind. Der so erhaltene Versteifungsring 14 hat im Wesentlichen dieselbe Außenkontur wie der Versteifungsring 14 nach Fig. 2, d.h. er bildet eine insgesamt durchgehende radiale innere Umfangsfläche 26 und eine dem Verlauf der Seilrille 38 folgende, radial außenliegende Umfangsfläche 29. Der Unterschied in der Außenkontur besteht im Wesentlichen hinsichtlich der Rücksprünge, die in einem Blechformteil nicht so steilflankig ausgeführt werden können.

Die Ringhälfte 14a ist ebenso wie die Ringhälfte 14b ein im Querschnitt U-förmiges Blechformteil mit einem im Wesentlichen geraden Schenkel 45, der an seinem äußeren Ende bei 46 nach innen zu abgebogen ist. Das Blechformteil geht bei 47 in einen planen Rücken 48 über, der im montierten Zustand parallel zu einer auf der Drehachse senkrecht stehenden Ebene verläuft. Bei 49 schließt sich wiederum ein nach außen verlaufender Schenkel 51 an, der so konturiert ist, dass die gewünschte Außengestalt entsteht. Hierdurch entstehen zur Seite offenen Nuten 50.

Um den vollständigen Ring 14 zu erhalten, werden die beiden Ringhälften 14a und 14b mit ihren beiden Rücken 48 aneinanderliegend angeordnet und beispielsweise längs den dadurch entstehenden Kehlen bei 52 und 53 miteinander verschweißt.

Da im Übrigen der Aufbau sonst der gleiche ist wie bei dem Ausführungsbeispiel nach Fig. 2, brauchen die übrigen Bauteile nicht weiter erläutert zu werden.

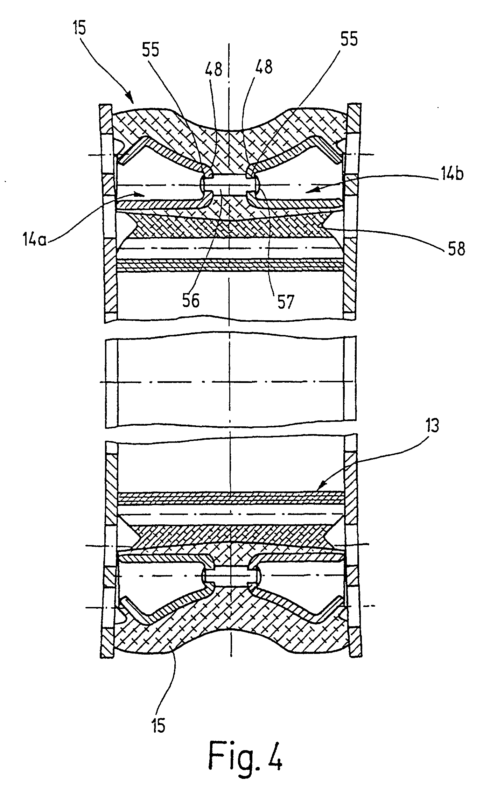

In Fig. 4 ist ein Ausführungsbeispiel gezeigt, bei dem der Versteifungsring 14 wiederum aus zwei als Blechformteil hergestellten Hälften 14a und 14b besteht. Diese beiden Hälften 14a und 14b haben eine im Querschnitt gesehen U-förmige Gestalt und sind untereinander gleich. Der wesentliche Unterschied zu der Ausführungsform nach Fig. 3 besteht darin, dass die axiale Tiefe der Blechformteile etwas geringer ist, damit, wie Fig. 4 erkennen lässt, die beiden Rücken 48 einen Abstand voneinander aufweisen.

Um sie aneinander zu befestigen, enthalten die Rücken 48 längs dem Umfang gleichmäßig beabstandete Bohrungen 55, durch die Zylindernieten 56 hindurchführen, die innerhalb des jeweiligen Profils unter Ausbildung eines Schließkopfes 57 vernietet sind. Dadurch wird es möglich, beim Herstellen des äußeren elastomeren Rings 15 dessen Material radial nach innen durch den Spalt zwischen den beiden Hälften des Versteifungsring 14 hindurchtreten zu lassen. Der Versteifungsring 14 bildet somit nicht mehr eine Grenze zwischen dem elastomeren äußeren Ring 15 und dem elastomeren inneren Ring 13. Er ist bei dem Ausführungsbeispiel nach Fig. 4 vielmehr in den äußeren elastomeren Ring 15 eingebettet. Die beiden elastomeren Ringe 14 und 15 treffen an einer Grenzschicht 58 unmittelbar aneinander. Diese Grenzschicht hat die Gestalt eines Doppelkegels mit der Ausrichtung, wie sie sich aus Fig. 4 ergibt, d.h. die Dicke des inneren elastomeren Rings 15 ist auf der Mitte zwischen den beiden Bordscheiben 12 am kleinsten.

An der Grenzschicht 58 können die beiden Ringe 13 und 15 entweder stoffschlüssig miteinander verbunden sein oder die Ringe 13 und 15 werden getrennt voneinander hergestellt, um nachträglich ineinander gesteckt zu werden.

Im Übrigen entspricht die Gestaltung des Reifens 3 nach Fig. 4 der Gestaltung des Reifens 3 nach Fig. 2.

Es versteht sich, dass der Versteifungsring 14 auch als Metallguss- oder -schmiedeteil ausgeführt sein bzw. aus solchen Teilen zusammengesetzt sein kann.

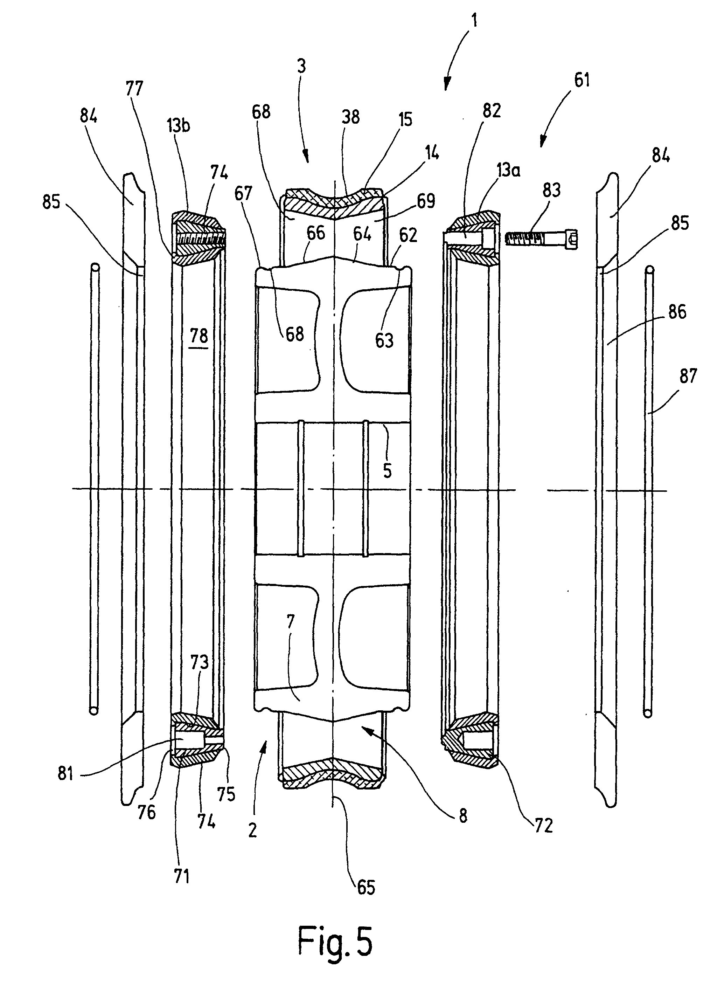

Fig. 5 zeigt ein anderes Ausführungsbeispiel der erfindungsgemäßen Seilrolle 1. Der wesentliche Unterschied zu den vorherigen Ausführungsbeispielen besteht in der Verwendung einer zusätzlichen Spanneinrichtung 61.

Während bei den vorherigen Ausführungsbeispielen der Rollenkörper 2 die Form eines Speichenrades hat, ist er bei dem Ausführungsbeispiel nach Fig. 5 als Scheibenrad gestaltet.

Die Sitzfläche 8 für den Reifen 3 beginnt an einer der Stirnseiten der Sitzfläche 8 mit einem kurzen zylindrischen Abschnitt 62, der eine Sprengringrille 63 enthält. An den zylindrischen Abschnitt 62 schließt sich eine kegelstumpfförmige Fläche 64 an, die so orientiert ist, dass sich der Durchmesser, durchgehend von dem zylinderischen Abschnitt 62, in Richtung auf die gegenüberliegende Stirnseite des Rollenkörpers 2 vergrößert. Der größte Durchmesser wird, bezogen auf die axiale Erstreckung des Rollenkörpers 2, etwa auf dessen Mitte bei einer Symmetrieebene 65 erreicht. An dieser Stelle beginnt eine zweite Kegelstumpffläche 66, jedoch mit umgekehrter Orientierung, d.h. ausgehend von der Symmetrieebene 65 verjüngt sich der Durchmesser. Die Kegelstumpffläche 66 geht schließlich in eine weitere Zylinderfläche 67 über, die ebenfalls eine Sprengringnut 68 enthält. Der Durchmesser der beiden Zylinderflächen 62 und 67 ist gleich. Die Außenumfangsfläche bzw. die Sitzfläche 8 ist, bezogen auf die Drehachse, rotationssymmetrisch, jedoch nicht mehr, wie bei den vorherigen Ausführungsbeispielen, zylindrisch.

Zu dem Reifen 3 gehören wie zuvor der radial äußere Ring 15 sowie der Versteifungsring 14.

Der radial äußere Ring 15 ist verhältnismäßig dünnwandig und enthält in seiner Außenseite die Seilrille 38. Der radial äußere Ring 15 besteht aus einem harten Kunststoff oder einem Elastomer mit einer Shorehärte zwischen 80 und 100.

Im Gegensatz zu dem vorherigen Ausführungsbeispiel ist der Versteifungsring 14, der mit dem radial äußeren Ring 15 stoffschlüssig, beispielsweise durch Vulkanisieren verbunden ist, vergleichsweise dünnwandig, bezogen auf die Radialrichtung. Er besteht aus einem ähnlichen Material, wie dies im Zusammenhang mit den vorherigen Ausführungsbeispielen erläutert ist. Seine Bohrung ist, abweichend von dem vorherigen Ausführungsbeispiel, keine zylindrische Bohrung, sondern sie hat die Gestalt eines doppelten Kegelstumpfes, bestehend aus zwei Kegelstumpfflächen 69 und 68, die so orientiert sind, dass sich, bezogen auf die axiale Erstreckung, in der Mitte des Versteifungsringes 14 eine Einschnürung ergibt. Die Winkelflächen der Konusflächen 68 und 69 sind komplementär zu den Konusflächen 64 und 66, wie sie auf dem Rollenkörper 2 ausgebildet sind.

Der Durchmesser der beiden Kegelstumpfflächen 68 und 69 ist, wie Fig. 5 erkennen lässt, deutlich größer als der Durchmesser der beiden Kegelstumpfflächen 64 und 66. Hierdurch entsteht zwischen dem Versteifungsring 14 und der Sitzfläche 8 ein Ringspalt, der von insgesamt vier Kegelflächen begrenzt ist.

Der radial innere Ring, der bei den vorherigen Ausführungsbeispielen ungeteilt war, setzt sich bei dem Ausführungsbeispiel nach Fig. 5 aus zwei Abschnitten 13a und 13b zusammen. Die beiden Abschnitte 13a und 13b sind zueinander spiegelsymmetrisch und jeweils die Mantelfläche von Kegelstümpfen. Ihre axiale Erstreckung ist etwa gleich der Länge der Kegelmantelfläche 68 bzw. 69.

Die Spanneinrichtung 61 umfasst zwei Spannringe 71 und 72, die zueinander im Wesentlichen spiegelsymmetrisch sind. Der Spannring 71 wird in radialer Richtung durch zwei Kegelstumpfflächen 73 und 74 begrenzt, die so orientiert sind, dass sie in Richtung auf die Symmetrieebene 65 konvergieren. Zwischen den beiden Kegelstumpfflächen 73 und 74 erstrecken sich zwei Stirnflächen 75 und 76. Diese Stirnflächen 75 und 76 sind im weitesten Sinne plane Flächen, wobei die Stirnfläche 75 der Symmetrieebene 65 zugekehrt ist. Das Material des Spannrings 71 ist beispielsweise Stahl.

Auf der Kegelstumpffläche 74 ist der Teil 13b des radial inneren Rings aufvulkanisiert. Der Kegelwinkel der Kegelstumpffläche 74 ist derart gewählt, dass die Kegelstumpffläche 74 parallel zu der Kegelstumpffläche 68 verläuft. Sinngemäß das Gleiche gilt für die Kegelstumpffläche 73, bezogen auf die Kegelstumpffläche 66.

Um eine möglichst gute Federwirkung zu erzielen, ist auf der radial innenliegenden Kegelstumpffläche 73 ein weiterer elastomrer Ring 77 aufvulkanisiert, der aus demselben Material besteht wie der radial innere Ring 13b. Seine freie Fläche 78 ist wiederum eine Kegelstumpffläche, die parallel zu der Kegelstumpffläche 66 verläuft.

Achsparallel zu dem Rollenkörper 3 enthält der Spannring 71 abwechselnd Gewindebohrungen 79 und Stufenbohrungen 81.

Der Spannring 72 hat im Wesentlichen dieselbe Gestalt wie der Spannring 71, weshalb die dortigen Strukturelemente mit demselben Bezugszeichen versehen sind wie die Strukturelemente des Spannrings 71. Auch der Spannring 72 trägt an seiner Innenseite eine zusätzliche elastomere Schicht 77, die eine kegelstumpfförmige Bohrung 78 umgrenzt. Anstelle der Gewindebohrungen 79 enthält jedoch der Spannring 72 Stufenbohrungen 82, die der Aufnahme von Befestigungsschrauben 83 dienen.

Den Aufbau der Seilrolle 1 vervollständigen schließlich zwei identisch gestaltete Bordscheiben 84, die als Planscheiben ausgebildet sind, deren Bohrung 85 einen Durchmesser hat entsprechend dem Außendurchmesser der beiden zylindrischen Abschnitte 62 und 67. Die Bohrung 85 ist zur Außenseite hin durch eine Fasenfläche 86 begrenzt, in der im montierten Zustand ein Sprengring 87 Platz findet, wenn er in die Sprenringrille 63 bzw. 68 eingesetzt ist.

Die Montage der erfindungsgemäßen Seilrolle 1 ist wie folgt:

Es wird zunächst von der linken Seite her der Spannring 71 mit dem aufvulkanisierten, radial äußeren Ring 13b und der elastomeren Beschichtung 77 auf den Rollenkörper 3 aufgesteckt. Sodann wird die linke Bordscheibe 84 aufgesetzt und der linke Sprengring 87 in die Sprengringrille 68 eingeschnappt. Es kann nun, ohne dass der Spannring 71 zur Seite hin ausweichen kann, die Einheit, bestehend aus dem Versteifungsring 14 und dem radial äußeren Ring 15, von rechts her aufgesteckt werden. Anschließend wird ebenfalls von rechts her der rechte Spannring 72 auf den Rollenkörper 3 aufgesetzt. Nachdem die Anordnung insoweit vorbereitet ist, werden die Spannringe 71 und 72 so weit gegeneinander verdreht, bis jeder Gewindebohrung 79 eine Stufenbohrung 82 gegenübersteht. Anschließend werden in jede Kombination aus Gewindebohrung 79 und Stufenbohrung 82 Schrauben 83 eingedreht und der Reihe nach festgezogen. Zufolge der kegelstumpfförmigen Gestalt der beiden Spannringe 71 und 72 in Verbindung mit den Kegelstumpfflächen 64, 66, 68, 69 wird beim Zusammenschrauben der beiden Spannringe 71 und 72 eine radiale Spannkraft erzeugt, die einerseits radial nach innen gegen die beiden Kegelstumpfflächen 64 und 66 gerichtet ist und andererseits gegen die beiden Kegelstumpfflächen 68 und 69 radial nach außen. Die Spannringe 71 und 72 wirken wie ringförmige Keile, die zwischen die Konusflächen 66, 68 bzw. 62, 69 gedrückt werden.

Abschließend wird die rechte Bordscheibe 84 aufgesetzt und mit Hilfe des in die Sprengringrille 63 eingeschnappten rechten Sprengrings 87 gesichert. Die Seilrolle 1 ist damit fertig montiert.

Durch mehr oder weniger starkes Anziehen der Schrauben 83 lässt sich die Vorspannung regulieren, mit der die beiden Abschnitte 13a und 13b des radial inneren Rings vorgespannt sind bzw. die elastomeren Beschichtungen 77 auf der Innenseite der beiden Spannringe 71 und 72. Zweckmäßigerweise sind die Materialien für die Abschnitte 13a und 13b des radial inneren Rings dieselben wie für die elastomeren Beschichtungen 77 und sie haben auch dieselbe Wandstärke. Auf diese Weise wirkt auch die elastomere Beschichtung 77 federnd, wenn über die Seilrolle eine Klemmfaust läuft und bestrebt ist, die Außenumfangsfläche des Reifens gegenüber der Nabe 5 radial wegzudrücken.

Die durch die Spannringe 71 und 72 hervorgerufene Vorspannung in dem radial inneren Ring 13a bzw. 13b sowie der elastomeren Beschichtung 77 wirkt so, dass diese sich erst nach Überschreiten einer bestimmten Radialkraft, gegeben durch die Vorspannung, weiter verformen. Die weitere Verformung geschieht dann allerdings mit derselben Härte oder Weichheit, als wäre keine zusätzliche Vorspannung vorhanden. Auf diese Weise lässt sich die Walkarbeit verringern, wenn beispielsweise nur das leere Seil über die Seilrolle 1 läuft. Erst dann, wenn größere Kräfte auftreten, entsteht eine Verformung des radial inneren Rings 13a bzw. 13b bzw. der elastomeren Beschichtungen 77 und in der Folge auch Walkarbeit.

Zufolge der radialen Vorspannung wird der Versteifungsring 14 zusammen mit dem daran fest vulkanisierten radial äußeren Ring zuverlässig reibschlüssig auf dem Sitz 8 festgehalten. Sollte der Reibschluss nicht ausreichen, besteht auch die Möglichkeit, zusätzlich bei der Montage die Beschichtung 77 mit der Kegelstumpffläche 64 bzw. 66 stoffschlüssig zu verbinden, beispielsweise wenn bei der Montage ein Klebstoff eingeführt wird oder nach der Montage die Grenzfläche nachvulkanisiert wird. Das Gleiche kann geschehen zwischen der Kegelstumpffläche 68 bzw. 69 und der Außenseite des radial inneren Rings 13a bzw. 13b.

Wie sich aus der Erläuterung der Montage ergibt, ist umgekehrt ohne weiteres eine Demontage möglich, einfach indem die oben erwähnten Handlungen in umgekehrter Reihenfolge abgewickelt werden. Auf diese Weise können auch bei einer an einem Mast montierten Seilrolle der verschleißbehaftete Reifen 3 und/oder die Spannringe 71, 72 ausgetauscht werden.

Eine Seilrolle besteht aus einem Seilrollengrundkörper, der eine zylindrische Außenumfangsfläche aufweist. Auf dieser zylindrischen Außenumfangsfläche sitzt ein Reifen, der bezüglich seiner radialen Ausdehnung sandwichartig gestaltet ist. Hierdurch entstehen mehrere zueinander konzentrische Ringe. Der radial am weitesten innenliegende Ring und der radial am weitesten außenliegende Ring ist jeweils ein elastomerer Ring, während sich dazwischen ein Versteifungsring befindet. Der elastomere äußere Ring ist härter als der elastomere innere Ring, damit eine sehr abriebfeste Fläche zustandekommt, über die das Seil läuft, während der elastomere innere Ring für eine ausreichende Nachgiebigkeit sorgt. Um die Seillast möglichst gleichmäßig über den elastomeren inneren Ring zu verteilen, ist der Versteifungsring vorgesehen.

## Patentansprüche

1. Seilrolle (1), insbesondere für Seilbahnen,
mit einem Rollenkörper (2), der eine rotationssymmtrische Außenumfangsfläche (8) und eine Seilrollennabe (4) aufweist, und
mit einem auf der Außenumfangsfläche (8) sitzenden Reifen (3), der wenigstens einen radial äußeren und einen radial inneren Ring (13,15) sowie einen Versteifungsring (14) aufweist, wobei
der Versteifungsring (14) aus einem Material besteht, das steif gegenüber dem radial inneren und dem radial äußeren - Ring (13,15) ist,
der Versteifungsring einen Durchmesser aufweist, der kleiner ist als der Außendurchmesser des radial äußeren Rings (15) ist,
der radial innere Ring (13) aus einem Elastomer besteht,
der radial äußere (15) aus einem Elastomer oder einem Kunststoff, und
der radial äußere Ring (15) eine größere Shore-Härte aufweist als der radial innere Ring (13).

2. Seilrolle nach Anspruch 1, **dadurch gekennzeichnet, dass** der Rollenkörper (2) zwei seitliche Flanken (9) aufweist, zwischen denen sich die Außenumfangsfläche (8) des Rollenkörpers (2) erstreckt und in die die Außenumfangsflache (8) des Rollenkörpers (2) übergeht.

3. Seilrolle nach Anspruch 2, **dadurch gekennzeichnet, dass** wenigstens eine der seitlichen Flanken (9) plan oder kegelstumpfförmig ist und dass an wenigsten einer der seitlichen Flanken (9) eine Bordscheibe (12) lösbar befestigt ist, die über die Außenumfangsfläche (8) des Rollenkörpers (2) radial nach außen übersteht.

4. Seilrolle nach Anspruch 1, **dadurch gekennzeichnet, dass** die Breite der Außenumfangsfläche (8) des Rollenkörpers (2) mit der Breite des radial inneren und des radial äußeren Rings (13,15) übereinstimmt.

5. Seilrolle nach Anspruch 1, **dadurch gekennzeichnet, dass** der radial innere und der radial äußere Ring (13,15) etwa gleich breit sind.

6. Seilrolle nach Anspruch 1, **dadurch gekennzeichnet, dass** der radial äußere Ring (15) eine Außenumfangsfläche (32) aufweist, die eine Rotationsfläche ist und die im unbelasteten Zustand zu der Seilrollennabe (4) konzentrisch ist.

7. Seilrolle nach Anspruch 1, **dadurch gekennzeichnet, dass** die Außenumfangsfläche (32) des radial äußeren Rings (15) eine Seilrille (38) enthält.

8. Seilrolle nach Anspruch 1, **dadurch gekennzeichnet, dass** der Versteifungsring (14) in dem radial äußeren oder dem radial inneren Ring (15) eingebettet ist.

9. Seilrolle nach Anspruch 1, **dadurch gekennzeichnet, dass** der Versteifungsring (14) zwischen dem radial äußeren oder dem radial inneren Ring (15) eingefügt ist.

10. Seilrolle nach Anspruch 1, **dadurch gekennzeichnet, dass** der Versteifungsring (14) ein Kunststoffformteil ist, das gegebenenfalls faserverstärkt ist.

11. Seilrolle nach Anspruch 1, **dadurch gekennzeichnet, dass** der Versteifungsring (14) ein Blechformteil aufweist.

12. Seilrolle nach Anspruch 1, **dadurch gekennzeichnet, dass** der Versteifungsring (14) ein Schmiedeteil aufweist.

13. Seilrolle nach Anspruch 1, **dadurch gekennzeichnet, dass** der Versteifungsring (14) ein Gussteil aufweist.

14. Seilrolle nach Anspruch 1, **dadurch gekennzeichnet, dass** der Versteifungsring (14) eine Außenumfangsfläche (29) aufweist, die derart gestaltet ist, das der radial äußere - Ring (15) über seine Breite gesehen etwa konstante Dicke aufweist.

15. Seilrolle nach Anspruch 1, **dadurch gekennzeichnet, dass** der Versteifungsring (14) eine Innenumfangsfläche (26) aufweist, die derart gestaltet ist, das der radial innere Ring (13) über seine Breite gesehen etwa konstante Dicke aufweist.

16. Seilrolle nach Anspruch 1, **dadurch gekennzeichnet, dass** der Versteifungsring (14) aus zwei Teilen (14a,14b) besteht, die längs einer Radialebene zusammen gefügt und aneinander befestigt sind.

17. Seilrolle nach Anspruch 15, **dadurch gekennzeichnet, dass** die beiden Teile (14a,14b) des Versteifungsrings (14) unmittelbar aneinander anliegen.

18. Seilrolle nach Anspruch 15, **dadurch gekennzeichnet, dass** die beiden Teile (14a,14b) des Versteifungsrings (14) unter Ausbildung wenigstens eines axialen Zwischenraum miteinander verbunden sind.

19. Seilrolle nach Anspruch 1, **dadurch gekennzeichnet, dass** der Versteifungsring (14) Sacköffnungen (42) enthält, die von der seitlichen Flanke (27,28) her in den Versteifungsring (14) hineinführen.

20. Seilrolle nach Anspruch 1, **dadurch gekennzeichnet, dass** der Versteifungsring (14) in Umfangsrichtung verlaufende Nuten (50) enthält, die von der seitlichen Flanke (27,28) her in den Versteifungsring (14) hineinführen.

21. Seilrolle nach Anspruch 1, **dadurch gekennzeichnet, dass** zumindest entweder der radial äußere oder der radial innere Ring (13,15) mit dem Versteifungsring (14) formschlüssig verbunden sind.

22. Seilrolle nach Anspruch 1, **dadurch gekennzeichnet, dass** der radial innere Ring (13) an seinen seitlichen Flanken (17,18) zumindest abschnittsweise gegenüber der durch die seitlichen Flanken (9) des Rollenkörpers (2) definierten Flächen zurückspringt.

23. Seilrolle nach Anspruch 1, **dadurch gekennzeichnet, dass** der radial innere Ring (13) mehrere in axialer Richtung verlaufende Durchgangsbohrungen (25) enthält, die längs dem Umfang äquidistant verteilt sind.

24. Seilrolle nach Anspruch 1, **dadurch gekennzeichnet, dass** der radial innere Ring (13) eine geringe innere Dämpfung aufweist.

25. Seilrolle nach Anspruch 1, **dadurch gekennzeichnet, dass** der Abstand der seitlichen Flanken (33,34) des radial äußeren Rings (15) gleich dem lichten Abstand der Bordscheiben (12) an dieser Stelle ist.

26. Seilrolle nach Anspruch 1, **dadurch gekennzeichnet, dass** zumindest der radial innere Ring (13) in der Nähe seiner Innenumfangsfläche (16) eine Textilverstärkung enthält.

27. Seilrolle nach Anspruch 1, **dadurch gekennzeichnet, dass** dem Reifen (3) eine Spanneinrichtung (61) zugeordnet ist, mittels derer der Reifen (3) auf der Außenumfangsfläche (8) des Rollenkörpers (3) radial verspannbar ist.

28. Seilrolle nach Anspruch 26, **dadurch gekennzeichnet, dass** die Spanneinrichtung (61) eine ringförmige im wesentlichen rotationssymmetrische Gestalt mit einer radial inneren und einer radial äußeren Fläche (73,74) aufweist.

29. Seilrolle nach Anspruch 26, **dadurch gekennzeichnet, dass** die Spanneinrichtung (61) bezogen auf die Radialrichtung zwischen dem radial inneren Ring (13) und der Außenumfangsflachen (8) des Rollenkörpers (3) eingefügt ist.

30. Seilrolle nach Anspruch 26, **dadurch gekennzeichnet, dass** die Spanneinrichtung (61) bezogen auf die Radialrichtung zwischen dem radial inneren Ring (13) und dem Versteifungsring (14) eingefügt ist.

31. Seilrolle nach Anspruch 26, **dadurch gekennzeichnet, dass** die Spanneinrichtung (61) bezogen auf die axiale Richtung des Rollenkörpers (3) in zwei Teile (71,72) aufgeteilt ist.

32. Seilrolle nach Anspruch 30, **dadurch gekennzeichnet, dass** der radial innere Ring (13) bezogen auf die axiale Richtung des Rollenkörpers (3) in zwei Teile (13a,13b) aufgeteilt ist und dass jeweils ein Teil (13a,13b) des radial inneren Rings (13) auf dem entsprechenden Teil (71,72) der Spanneinrichtung (61) sitzt.

33. Seilrolle nach Anspruch 26, **dadurch gekennzeichnet, dass** die Spanneinrichtung (61) auf ihrer radial innereren Fläche (73) eine elastomere Beschichtung (77) trägt, die mit der Spanneinrichtung (61) stoffschlüssig verbunden ist.

34. Seilrolle nach Anspruch 32, **dadurch gekennzeichnet, dass** die elastomere Beschichtung (77) aus demselben Material besteht wie der radial innere Ring (13).

35. Seilrolle nach Anspruch 26, **dadurch gekennzeichnet, dass** jedes ringförmige Teil (71,72) der Spanneinrichtung (61) eine kegelstumpfförmige Außengestalt und eine kegelstumpfförmige Bohrung (73) aufweist, wobei die radiale Dicke an einem axialen Ende (75) jedes ringförmigen Teils (71,72) kleiner ist als an dem anderen axialen Ende (76), und dass im montierten Zustand sich ein Ring ergibt, der bezogen auf seine axiale Erstreckung etwa in der Mitte eingeschnürt ist.

36. Seilrolle nach Anspruch 26, **dadurch gekennzeichnet, dass** die beiden Teile (71) mittels Schrauben (83) zusammengeschraubt sind.

37. Seilrolle nach Anspruch 1, **dadurch gekennzeichnet, dass** die Außenumfangsfläche (8) des Rollenkörpers (3) einen Doppelkegel bildet, der an der Stoßstelle (65) zwischen den beiden Kegeln den größten Durchmesser aufweist.

38. Seilrolle nach Anspruch 1, **dadurch gekennzeichnet, dass** die Außenumfangsfläche (8) des Rollenkörpers (3) eine Zylinderfläche bildet.

## Claims

1. Pulley (1), in particular for cableways,
with a roller body (2), which has a rotationally symmetric outer peripheral surface (8) and a pulley hub (4), and
with a tyre (3) sitting on the outer peripheral surface (8), said tyre having at least one radially outer and one radially inner ring (13, 15) as well as a reinforcing ring (14), wherein
the reinforcing ring (14) is made of a material, which is rigid in relation to the radially inner and radially outer rings (13, 15),
the reinforcing ring has a diameter that is smaller than the outside diameter of the radially outer ring (15),
the radially inner ring (13) is made of an elastomer,
the radially outer ring (15) is made of an elastomer or a plastic, and
the radially outer ring (15) has a greater Shore hardness than the radially inner ring (13).

2. Pulley according to Claim 1, **characterised in that** the roller body (2) has two lateral flanks (9), between which the outer peripheral surface (8) of the roller body (2) extends and into which the outer peripheral surface (8) of the roller body (2) merges.

3. Pulley according to Claim 2, **characterised in that** at least one of the lateral flanks (9) is plane or in the shape of a truncated cone, and that a flanged wheel (12), which projects radially outwards over the outer peripheral surface (8) of the roller body (2), is detachably fastened to at least one of the lateral flanks (9).

4. Pulley according to Claim 1, **characterised in that** the width of the outer peripheral surface (8) of the roller body (2) is the same as the width of the radially inner and radially outer rings (13, 15).

5. Pulley according to Claim 1, **characterised in that** the radially inner and radially outer rings (13, 15) are approximately equal in width.

6. Pulley according to Claim 1, **characterised in that** the radially outer ring (15) has an outer peripheral surface (32), which is a surface of rotation and which is concentric to the pulley hub (4) when not subject to load.

7. Pulley according to Claim 1, **characterised in that** the outer peripheral surface (32) of the radially outer ring (15) contains a cable groove (38).

8. Pulley according to Claim 1, **characterised in that** the reinforcing ring (14) is embedded in the radially outer or the radially inner ring (15).

9. Pulley according to Claim 1, **characterised in that** the reinforcing ring (14) is inserted between the radially outer or the radially inner ring (15).

10. Pulley according to Claim 1, **characterised in that** the reinforcing ring (14) is a plastic shaped part, which may possibly be fibre-reinforced.

11. Pulley according to Claim 1, **characterised in that** the reinforcing ring (14) has a sheet metal shaped part.

12. Pulley according to Claim 1, **characterised in that** the reinforcing ring (14) has a forged part.

13. Pulley according to Claim 1, **characterised in that** the reinforcing ring (14) has a casting.

14. Pulley according to Claim 1, **characterised in that** the reinforcing ring (14) has an outer peripheral surface (29), which is formed in such a manner that the radially outer ring (15) has an approximately constant thickness viewed over its width.

15. Pulley according to Claim 1, **characterised in that** the reinforcing ring (14) has an inner peripheral surface (26), which is formed in such a manner that the radially inner ring (13) has an approximately constant thickness viewed over its width.

16. Pulley according to Claim 1, **characterised in that** the reinforcing ring (14) comprises two parts (14a, 14b), which are joined along a radial plane and are fastened to one another.

17. Pulley according to Claim 15, **characterised in that** the two parts (14a, 14b) of the reinforcing ring (14) directly abut one another.

18. Pulley according to Claim 15, **characterised in that** the two parts (14a, 14b) of the reinforcing ring (14) are connected to one another forming at least one axial interstice.

19. Pulley according to Claim 1, **characterised in that** the reinforcing ring (14) contains blind openings (42), which lead into the reinforcing ring (14) from the lateral flank (27, 28).

20. Pulley according to Claim 1, **characterised in that** the reinforcing ring (14) contains grooves (50) running in peripheral direction, which lead into the reinforcing ring (14) from the lateral flank (27, 28).

21. Pulley according to Claim 1, **characterised in that** either the radially outer or the radially inner ring (13, 15) is positively connected to the reinforcing ring (14).

22. Pulley according to Claim 1, **characterised in that** at its lateral flanks (17, 18), the radially inner ring (13) is stepped back, at least in sections, in relation to the surfaces defined by the lateral flanks (9) of the roller body (2).

23. Pulley according to Claim 1, **characterised in that** the radially inner ring (13) contains several through-holes (25) running in axial direction and distributed at equal distances along the periphery.

24. Pulley according to Claim 1, **characterised in that** the radially inner ring (13) has slight internal damping.

25. Pulley according to Claim 1, **characterised in that** the distance between the lateral flanks (33, 34) of the radially outer ring (15) is equal to the clear distance between the flanged wheels (12) at this point.

26. Pulley according to Claim 1, **characterised in that** at least the radially inner ring (13) contains a fabric reinforcement in the vicinity of its inner peripheral surface (16).

27. Pulley according to Claim 1, **characterised in that** the tyre (3) has an associated clamping means (61), by means of which the tyre (3) may be held radially in position on the outer peripheral surface (8) of the roller body (3).

28. Pulley according to Claim 27, **characterised in that** the clamping means (61) has a ring-shaped, essentially rotationally symmetric form with a radially inner or a radially outer surface (73, 74).

29. Pulley according to Claim 27, **characterised in that** relative to the radial direction, the clamping means (61) is inserted between the radially inner ring (13) and the outer peripheral surfaces (8) of the roller body (3).

30. Pulley according to Claim 27, characterised that relative to the radial direction, the clamping means (61) is inserted between the radially inner ring (13) and the reinforcing ring (14).

31. Pulley according to Claim 27, characterised that relative to the axial direction of the roller body (3), the clamping means (61) is divided into two parts (71, 72).

32. Pulley according to Claim 31, characterised that relative to the axial direction of the roller body (3), the radially inner ring (13) is divided into two parts (13a, 13b), and that a respective part (13a, 13b) of the radially inner ring (13) sits on the corresponding part (71, 72) of the clamping means (61).

33. Pulley according to Claim 27, characterised that on its radial inner surface (73), the clamping means (61) bears an elastomeric coating (77), which is joined by material to the clamping means (61).

34. Pulley according to Claim 33, characterised the clamping elastomeric coating (77) is made of the same material as the radially inner ring (13).

35. Pulley according to Claim 27, characterised that each ring-shaped part (71, 72) of the clamping means (61) has a truncated-cone-shaped outer form and a truncated-cone-shaped hole (73), wherein the radial thickness at an axial end (75) of each ring-shaped part (71, 72) is smaller than at the other axial end (76), and that in the assembled position, a ring results, which is narrowed approximately in the centre in relation to its axial extension.

36. Pulley according to Claim 27, characterised that the two parts (71, 72) are screwed together by means of screws (83).

37. Pulley according to Claim 1, characterised that the outer peripheral surface (8) of the roller body (3) forms a double cone, which has the largest diameter at the contact point (65) between the two cones.

38. Pulley according to Claim 1, characterised that the outer peripheral surface (8) of the roller body (3) forms a cylinder surface.

## Revendications

1. Poulie à câble (1), en particulier pour transporteur aériens et téléphériques,
avec un corps de poulie (2), qui présente une surface périphérique extérieure (8) symétrique de révolution et un moyeu de poulie à câble (4), et
avec un bandage (3) disposé sur la surface périphérique extérieure (8), qui présente au moins un anneau radialement extérieur et un anneau radialement intérieur (13, 15) ainsi qu'un anneau de rigidification (14),
l'anneau de rigidification (14) étant en un matériau qui est raide par rapport par rapport aux anneaux radialement intérieur et extérieur,
l'anneau de rigidification présentant un diamètre extérieur qui est inférieur au diamètre extérieur de l'anneau radialement extérieur (15),
l'anneau radialement intérieur (13) étant en un élastomère,
l'anneau radialement extérieur (15) étant en un élastomère ou en une matière plastique et
l'anneau radialement extérieur (15) présentant un dureté Shore supérieure à celle de l'anneau radialement intérieur (13).

2. Poulie à câble selon la revendication 1, **caractérisée en ce que** le corps de poulie (2) comporte deux flancs (9) latéraux entre lesquels s'étend la surface périphérique extérieure (8) du corps de poulie (2) et auxquels se raccorde ladite surface périphérique extérieure (8) du corps de poulie (2).

3. Poulie à câble selon la revendication 2, **caractérisée en ce qu'**au moins un des flancs (9) latéraux est plan ou tronconique et **en ce qu'**à au moins un des flancs (9) latéraux est fixé un flasque (12) démontable, qui s'étend radialement au-delà de la surface périphérique extérieure (8) du corps de poulie (2).

4. Poulie à câble selon la revendication 1, **caractérisée en ce que** la largeur de la surface périphérique extérieure (8) du corps de poulie (2) correspond à la largeur des anneaux radialement intérieur et extérieur (13, 15).

5. Poulie à câble selon la revendication 1, **caractérisée en ce que** l'anneau radialement intérieur et l'anneau radialement extérieur (13, 15) ont sensiblement la même largeur.

6. Poulie à câble selon la revendication 1, **caractérisée en ce que** l'anneau radialement extérieur (15) présente une surface périphérique extérieure (32) qui est une surface de révolution et qui à l'état non chargé est concentrique avec le moyeu de poulie à câble (4).

7. Poulie à câble selon la revendication 1, **caractérisée en ce que** la surface périphérique extérieure (32) de l'anneau radialement extérieur (15) comporte une gorge à câble (38).

8. Poulie à câble selon la revendication 1, **caractérisée en ce que** l'anneau de rigidification (14) est noyé dans l'anneau radialement extérieur ou l'anneau radialement intérieur (15).

9. Poulie à câble selon la revendication 1, **caractérisée en ce que** l'anneau de rigidification (14) est inséré entre l'anneau radialement extérieur ou l'anneau radialement intérieur (15).

10. Poulie à câble selon la revendication 1, **caractérisée en ce que** l'anneau de rigidification (14) est un élément moulé en matière plastique, le cas échéant renforcé par fibres.

11. Poulie à câble selon la revendication 1, **caractérisée en ce que** l'anneau de rigidification (14) comprend un élément façonné en tôle.

12. Poulie à câble selon la revendication 1, **caractérisée en ce que** l'anneau de rigidification (14) comprend un élément forgé.

13. Poulie à câble selon la revendication 1, **caractérisée en ce que** l'anneau de rigidification (14) comprend un élément moulé en acier.

14. Poulie à câble selon la revendication 1, **caractérisée en ce que** l'anneau de rigidification (14) présente une surface périphérique extérieure (29), qui est conformée de telle sorte que l'anneau radialement extérieur (15) présente une épaisseur sensiblement constante sur sa largeur.

15. Poulie à câble selon la revendication 1, **caractérisée en ce que** l'anneau de rigidification (14) présente une surface périphérique intérieure (26), qui est conformée de telle sorte que l'anneau radialement intérieur (13) présente une épaisseur sensiblement constante sur sa largeur.

16. Poulie à câble selon la revendication 1, **caractérisée en ce que** l'anneau de rigidification (14) est formé de deux parties (14a, 14b) qui sont assemblées le long d'un plan radial et sont fixées l'une à l'autre.

17. Poulie à câble selon la revendication 15, **caractérisée en ce que** les deux parties (14a, 14b) de l'anneau de rigidification (14) sont appliquées directement l'une contre l'autre.

18. Poulie à câble selon la revendication 15, **caractérisée en ce que** les deux parties (14a, 14b) de l'anneau de rigidification (14) sont reliées l'une à l'autre en délimitant au moins un espace intermédiaire axial.

19. Poulie à câble selon la revendication 1, **caractérisée en ce que** l'anneau de rigidification (14) comporte des ouvertures non débouchantes (42) qui mènent du flanc latéral (27, 28) à l'intérieur de l'anneau de rigidification (14).

20. Poulie à câble selon la revendication 1, **caractérisée en ce que** l'anneau de rigidification (14) comporte des gorges (50) qui s'étendent dans la direction périphérique et mènent du flanc latéral (27, 28) à l'intérieu de l'anneau de rigidification (14).

21. Poulie à câble selon la revendication 1, **caractérisée en ce qu'**au moins soit l'anneau radialement extérieur, soit l'anneau radialement intérieur (13, 15) est lié par complémentarité de formes à l'anneau de rigidification (14).

22. Poulie à câble selon la revendication 1, **caractérisée en ce qu'**au moins soit l'anneau radialement intérieur (13), au niveau de ses flancs latéraux (17, 18), au moins par tronçons, est en retrait par rapport aux surfaces définies par les flancs latéraux (9) du corps de poulie (2).

23. Poulie à câble selon la revendication 1, **caractérisée en ce que** l'anneau radialement intérieur (13) comporte plusieurs trous débouchants (25) qui sont disposés à égales distance le long de la circonférence.

24. Poulie à câble selon la revendication 1, **caractérisée en ce que** l'anneau radialement intérieur (13) présente un faible amortissement intérieur.

25. Poulie à câble selon la revendication 1, **caractérisée en ce que** la distance entre les flancs latéraux (33, 34) de l'anneau radialement extérieur (15) est égale à l'espace libre entre les flasques latéraux (12) à cet endroit.

26. Poulie à câble selon la revendication 1, **caractérisée en ce qu'**au moins l'anneau radialement intérieur (13) comporte un renfort textile, au niveau de sa surface périphérique intérieure (16).

27. Poulie à câble selon la revendication 1, **caractérisée en ce qu'**au bandage est associé (3) un dispositif de tension (61), à l'aide duquel le bandage (3) est tendu radialement sur la surface périphérique extérieure (8) du corps de poulie (3).

28. Poulie à câble selon la revendication 26, **caractérisée en ce que** le dispositif de tension (61) a une forme essentiellement symétrique de révolution, avec une surface radialement intérieure et une surface radialement extérieure (73, 74).

29. Poulie à câble selon la revendication 26, **caractérisée en ce que** le dispositif de tension (61), rapporté à la direction radiale, est inséré entre l'anneau radialement intérieur (13) et la surface périphérique extérieure (8) du corps de poulie (3).

30. Poulie à câble selon la revendication 26, **caractérisée en ce que** le dispositif de tension (61), rapporté à la direction radiale, est inséré entre l'anneau radialement intérieur (13) et l'anneau de rigidification (14)

31. Poulie à câble selon la revendication 26, **caractérisée en ce que** le dispositif de tension (61), rapporté à la direction axiale du corps de poulie (3), est divisé en deux parties (71, 72).

32. Poulie à câble selon la revendication 30, **caractérisée en ce que** l'anneau radialement intérieur (13), rapporté à la direction axiale du corps de poulie (3), est divisé en deux parties (13a, 13b) et **en ce qu'**une partie (13a, 13b) de l'anneau radialement intérieur (13) repose chaque fois sur la partie (71, 72) correspondante du dispositif de serrage (61).

33. Poulie à câble selon la revendication 26, **caractérisée en ce que** le dispositif de tension (61), porte sur sa surface radialement intérieure (73) un revêtement élastomère (77) qui est lié par matière au dispositif de tension (61).

34. Poulie à câble selon la revendication 32, **caractérisée en ce que** le revêtement élastomère (77) est en le même matériau que l'anneau radialement intérieur (13).

35. Poulie à câble selon la revendication 26, **caractérisée en ce que** chaque partie (71, 72) annulaire du dispositif de tension (61) présente une forme extérieure en tronc de cône et un trou (73) tronconique, l'épaisseur radiale à une extrémité axiale (75) de chacune des parties (71, 72) étant inférieure à l'épaisseur radiale à l'autre extrémité axiale (76), et **en ce qu'**à l'état monté, on obtient un anneau qui, dans sa dimension axiale est resserré au centre.

36. Poulie à câble selon la revendication 26, **caractérisée en ce que** les deux parties (71) sont assemblées au moyen de vis (83).

37. Poulie à câble selon la revendication 1, **caractérisée en ce que** la surface périphérique extérieure (8) du corps de poulie (3) forme un double cône, dont le plus grand diamètre est situé au niveau du joint d'assemblage (65) entre les deux cônes.

38. Poulie à câble selon la revendication 1, **caractérisée en ce que** la surface périphérique extérieure (8) du corps de poulie (3) forme une surface cylindrique.
